# EUROPÄISCHE PATENTSCHRIFT

(11) **EP 0 690 005 B1**
(45) Veröffentlichungstag und Bekanntmachung des Hinweises auf die Patenterteilung: **10.11.1999**
(21) Anmeldenummer: 95110053.6
(22) Anmeldetag: 28.06.1995
(51) Int. Cl.: B65D 19/26

(54) **Transport- bzw. Lagerpalette**
Transport- and storage pallet
Palette de transport et de stockage

(30) Priorität: 28.06.1994 DE 4422542
(43) Veröffentlichungstag der Anmeldung: 03.01.1996
(73) Patentinhaber: Gairing, Rolf Helmut, 70329 Stuttgart (DE)
(72) Erfinder: Gairing, Rolf Helmut, 70329 Stuttgart (DE)

(56) Entgegenhaltungen:
- FR-A- 2 640 938
- US-A- 5 226 373
- PATENT ABSTRACTS OF JAPAN vol. 2, no. 144 (C-029), 30.November 1978 & JP-A-77 024922 (MITSUBISHI PETROCHEM CO LTD), 27.September 1978,

## Beschreibung

Die Erfindung betrifft eine Transport- bzw. Lagerpalette, insbesondere eine sogenannte EURO-Palette (die Abmessungen der EURO-Palette sind genormt), mit einer Deckplatte zum Ablegen des zu transportierenden bzw. abzulegenden Gutes besitzt, an deren Unterseite Öffnungen zum Einschieben der gabelförmigen Tragelemente eines Hubgerätes, Flurförderfahrzeugs oder dergleichen vorgesehen sind, wobei die Deckplatte ein durch mindestens eine metallische Einlage ausgesteiftes Formteil aus einer Verbundmasse ist, welche mindestens im wesentlichen aus Altreifen-Gummigranulat und einer Bindemittelmasse besteht.

Eine derantige Palette ist beispielsweise aus dem Dokument US-A-5 226 373 bekannt.

Allein in der Bundesrepublik Deutschland fallen jährlich etwa 700 000 t Altreifen an, die bislang entweder auf Halde gelagert, ins Ausland verbracht oder einer thermischen Verwertung zugeführt wurden, wobei letzteres erhebliche Emissionsprobleme mit sich bringt. Deshalb wäre es sinnvoll, wenn Altreifen als Rohstoff für die Herstellung neuer Produkte verwendet würden, was bislang in der Praxis jedoch nicht erfolgt ist, zumindest nicht in nennenswertem Umfang.

Transport- bzw. Lagerpaletten wurden bisher nahezu ausschließlich aus Holz hergestellt.

In dem DE-U-91 03 462.0 wird eine Palette beschrieben, welche im Spritzgußverfahren aus Kunststoff hergestellt und zur Aussteifung biegesteife, in den Kunststoff eingebettete metallische Bewehrungen aufweisen soll. Abgesehen davon, daß zur Herstellung dieser Palette kein durch ein Recyclingverfahren gewonnener Werkstoff verwendet wird, dürften Kunststoff-Paletten den rauhen Einsatzbedingungen nicht gewachsen sein, da im Spritzgußverfahren verarbeitbare Kunststoffe im allgemeinen nicht stoßfest genug sind.

In der DE-A-42 00 662 wird eine "Stapelplatte" vorgeschlagen, welche aus bei der Reifenherstellung anfallendem Abfall hergestellt werden soll. Das zerkleinerte Abfallmaterial soll unter Anwendung von Druck zu Platten verarbeitet werden, was jedoch nicht vorstellbar ist, weil sich Partikel aus ausvulkanisiertem Gummi durch Druck nicht miteinander verbinden lassen.

In der DE-A-41 40 583 wird eine Palette der eingangs erwähnten Art beschrieben, d.h. eine Palette, zu deren Herstellung Altreifen-Gummigranulat verwendet wird; diese bekannte Palette besteht aus einer Deckplatte, einer Bodenplatte und aus zwischen diesen beiden Platten angeordneten Distanzstücken, über die die beiden Platten miteinander verbunden sind. Einzelne oder alle Elemente dieser Palette sollen aus einem Gemisch aus zunächst zerkleinertem und dann gemahlenem Altreifenmaterial und Kunststoffabfällen bestehen, wobei der Kunststoffanteil bis zu 20 % betragen und das besagte Gemisch mechanisch replastifiziert und dann im Spritzgußverfahren zu dem betreffenden Paletten-Bauteil verarbeitet werden soll. Zur Formstabilisierung der Deckplatte und/oder der Bodenplatte soll in die Gummi/Kunststoff-Verbundmasse eine Armierung eingelegt sein, bei der es sich insbesondere um ein Metallgitter handelt.

Bei einer Herstellung der in der DE-A-41 40 583 beschriebenen Palette dürften sich jedoch ganz erhebliche Schwierigkeiten ergeben, u.z. aus folgenden Gründen: Zum einen dürfte es überhaupt schwierig, wenn nicht gar unmöglich sein, die vorstehend beschriebene Verbundmasse durch Spritzgießen zu verarbeiten, und zum anderen dürften sich bei einem zuverlässigen Positionieren der Metallgitter-Armierung in einer mit der vorstehend beschriebenen Verbundmasse unter Druck zu befüllenden Spritzgießform Schwierigkeiten vor allem dann ergeben, wenn vom fertigen Bauteil gefordert wird, daß die Armierung allseitig von der Verbundmasse abgedeckt, d.h. in die letztere vollständig eingebettet ist.

Der Erfindung lag die Aufgabe zugrunde, einen Weg aufzuzeigen, wie unter Verwendung von Altreifenmaterial Paletten hergestellt werden können, die zum einen hinreichend steif und tragfähig sowie resistent gegen Umwelteinflüsse sind, ohne zu schwer zu sein, und die sich zum anderen mit vertretbarem Kostenaufwand herstellen lassen.

Ausgehend von einer Palette der eingangs erwähnten Art läßt sich diese Aufgabe durch die Kennzeichnenden Merkmale des Anspruchs 1 lösen. Dadurch, daß zur Herstellung insbesondere der Deckplatte einer erfindungsgemäßen Palette wenigstens zwei aus dem Altreifen-Gummigranulat und einem Bindemittel gewonnene Lagen und die metallische Versteifungseinlage in einer Pressenform aufeinandergeschichtet werden, entfallen zunächst einmal die mit dem richtigen Positionieren der metallischen Einlage verbundenen Probleme; des weiteren läßt sich die aus einem Gemisch aus Altreifen-Gummigranulat und Bindemittel bestehende Verbundmasse zwar höchstwahrscheinlich durch Spritzgießen nicht vernünftig verarbeiten, wohl aber lassen sich aus einer solchen Verbundmasse ohne weiteres Bahnen walzen, aus denen sich die vorstehend erwähnten Lagen einer erfindungsgemäßen Palette zuschneiden lassen, und wenn man während der Herstellung der Bahnen bzw. Lagen das Bindemittel nicht vollständig aushärten läßt, lassen sich die zur Herstellung der Deckplatte aufeinandergeschichteten Lagen in einer Presse und insbesondere bei erhöhten Temperaturen auch ohne weiteres zu einer Einheit miteinander verbinden. Auch läßt sich, wie sich aus dem Folgenden noch ergeben wird, mit dem erfindungsgemäßen Aufbau eine Palette erzielen, welche zumindest nicht wesentlich schwerer ist als die bekannten Holz-Paletten, da sich die Gummigranulat-Verbundmasse verhältnismäßig dünn auswalzen läßt, während beim Spritzgießen als formgebendem Verfahren sich aus einer Verbundmasse der in Rede stehenden Art dünnwandige Hüllagen für die metallische Einlage nicht erzielen ließen. Die erfindungsgemäße Palette ist absolut wetterfest und korossionsbeständig, da gewährleistet ist, daß die der Aussteifung dienenden metallischen Einlagen vollständig mit Gummigranulat-Verbundmasse ummantelt sind.

Bei der metallischen Einlage könnte es sich um Metallprofilstäbe, gitterförmige metallische Einlagen oder dergleichen handeln, billiger und im Hinblick auf die anzustrebende geringe Dicke insbesondere der Deckplatte der erfindungsgemäßen Palette zweckmäßiger ist es jedoch, wenn es sich bei der Einlage um eine Metallblechplatte handelt, u.z. vorzugsweise um eine Stahlblechplatte, welche noch mit einem Überzug versehen sein kann, welcher sie vor innerer Korossion schützt und/oder zu einer besonders guten Haftung der Verbundmasse an der Einlage führt.

Zum Zwecke der weiteren Reduzierung des Gewichts empfiehlt es sich, eine gelochte Metallblechplatte als Einlage zu verwenden; in diesem Fall läßt sich noch eine weitere Verbesserung herbeiführen, indem das Palettenbauteil so gestaltet wird, daß die Verbundmasse-Lagen auch durch die Löcher der Metallblechplatte hindurch miteinander verbunden sind, was sich beim Verpressen der Elemente des Laminats ohne weiteres erreichen läßt.

Damit die Einlage bei einer geforderten Biegesteifigkeit ein möglichst geringes Gewicht hat bzw. die Blechdicke bei gleichbleibender Biegesteifigkeit verringert werden kann, empfiehlt es sich, die Metallblechplatte mit einer ihre Biegesteifigkeit erhöhenden Profilierung zu versehen, was sich am einfachsten dadurch erzielen läßt, daß man der Metallblechplatte ein Wellenprofil verleiht.

Wenn als Bindemittel eine synthetische Latexmasse verwendet wird, kann der Bindemittelanteil der Verbundmasse bei einer mittleren Korngröße des Gummigranulats von ca. 1 mm ohne weiteres auf 10 bis 15 Gew.%, vorzugsweise auf 12 % reduziert werden - je geringer der Bindemittelanteil ist, umso kostengünstiger läßt sich die Verbundmasse herstellen -, und Latex (aus natürlichem oder vorzugsweise synthetischem Kautschuk) führt noch zu einem weiteren Vorteil: Beim Auswalzen der Verbundmasse kann man das Bindemittel nur anvulkanisieren, so daß sich dann später die Lagen des Laminats durch Pressen miteinander fest verbinden lassen, wenn man bei erhöhten Temperaturen, insbesondere bei ca. 180° C, arbeitet und die Latexmatte dabei ausvulkanisiert. Man kommt ferner mit umso weniger Bindemittel aus, je größer die mittlere Korngröße des Gummigranulats ist, so daß bei einer Korngröße von ca. 2 mm nur ca. 5 bis 7 % Bindemittel erforderlich sind.

Bevorzugte Ausführungsformen der erfindungsgemäßen Palette zeichnen sich dadurch aus, daß die Deckplatte eine geschlossene Oberseite hat, die vorzugsweise eben und glatt ist, während die Unterseite ein Raster von Aussparungen aufweist, welche der Gewichtsreduzierung der Deckplatte dienen.

Vorteilhafterweise werden nicht nur die Deckplatten erfindungsgemäßer Paletten aus der beschriebenen Verbundmasse hergestellt, sondern auch noch die Distanzstücke, vorzugsweise aber auch das Bodenauflageelement (Bodenplatte) oder die Bodenauflageelemente (Kufen). In die Distanzstücke lassen sich schon bei deren Herstellung Gewindebuchsen einbetten oder später in eine Bohrung der Distanzstücke einpressen, so daß sich dann die verschiedenen Bauteile der Palette durch Schrauben miteinander verbinden lassen. Bei der Herstellung der Distanzstücke empfiehlt es sich, in ihren aus der Verbundmasse bestehenden Körper mehrere, sich in vertikaler Richtung erstreckende kanalartige Hohlräume einzuformen, die nicht nur zu einer weiteren Gewichtsreduzierung führen, sondern vor allem zu einer Erhöhung der radialen Elastizität der Distanzstücke, was sich beim Einfahren der Gabeln eines Hub- bzw. Fördergeräts zwischen die Distanzstücke vorteilhaft auswirkt.

Wie sich aus dem Vorstehenden ergibt, ist Gegenstand der vorliegenden Erfindung auch ein Verfahren zur Herstellung einer Palette, welches sich dadurch auszeichnet, daß ein Gemisch aus Altreifen-Gummigranulat und einer Bindemittelmasse durch Walzen (Kalandrieren) zu einer Bahn verarbeitet wird, daß aus der Bahn der Größe der Deckplatte bzw. des Bodenauflageelements entsprechende Zuschnitte hergestellt werden, daß wenigstens zwei Lagen aus solchen Zuschnitten und die metallische Einlage als Zwischenlage aufeinandergeschichtet werden und daß die Elemente des so erhaltenen Laminats bei hinreichend hohen Temperaturen durch Pressen zu einer Einheit verbunden werden.

Im folgenden werden eine bevorzugte Ausführungsform der erfindungsgemäßen Palette sowie ein Herstellungsverfahren für eine erfindungsgemäße Palette näher erläutert, u.z. anhand der beigefügten Zeichnung, wobei sich aus letzterer und der nachfolgenden Beschreibung weitere Einzelheiten, Vorteile und Merkmale der Erfindung ergeben; in der Zeichnung zeichen:
- Fig. 1: eine Draufsicht auf die Palette, wobei in der oberen rechten Ecke die Deckplatte der Palette weggebrochen wurde;
- Fig. 2: eine Seitenansicht der Palette, gesehen in Richtung des Pfeils A in Figur 1;
- Fig. 3: eine weitere Seitenansicht der Palette, gesehen in Richtung des Pfeils B in Figur 1;
- Fig. 4: eine Draufsicht auf eine die Einlage der Deckplatte der Palette bildende Metallblechplatte;
- Fig. 5: einen Schnitt durch einen Randbereich dieser Einlage, u.z. einen Schnitt nach der Linie A-A in Figur 4;
- Fig. 6: eine Ansicht einer der Kufen der Palette samt den diese Kufe haltenden Distanzelementen von unten, und
- Fig. 7: einen Schnitt durch diese Kufe gemäß der Linie B-B in Figur 6 sowie in größerem Maßstab.

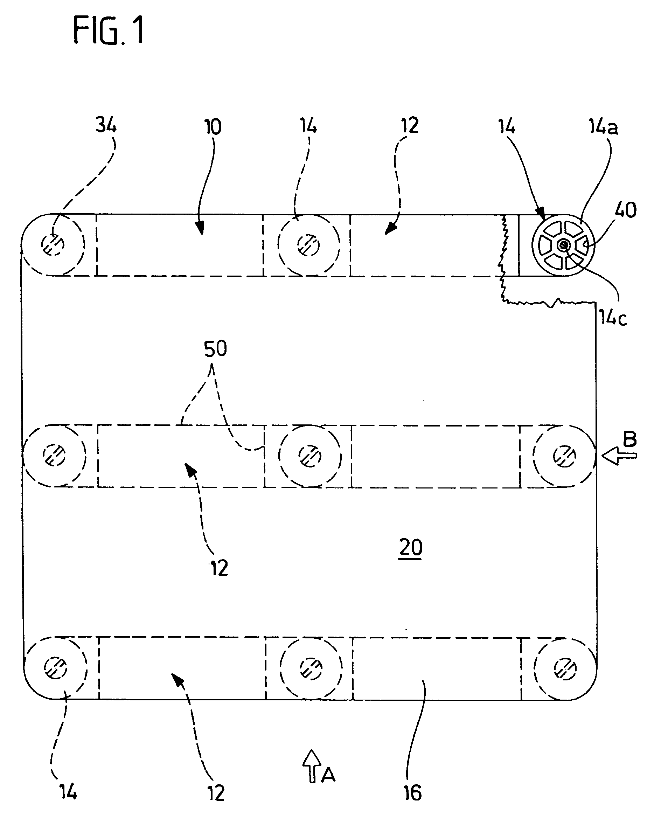

Wie aus den Figuren 1 bis 3 ersichtlich, besteht die Palette aus einer ihre Oberseite bildenden Deckplatte 10, drei parallel zueinander und zur Deckplatte verlaufenden Kufen 12 als Bodenauflageelemente und drei Reihen von jeweils drei Distanzstücken 14, wobei jede Kufe über eine Reihe solcher Distanzstücke mit der Deckplatte 10 verbunden ist, was im einzelnen später noch erläutert werden wird.

Die Deckplatte 10 hat eine geschlossene, ebene Oberseite 16 und eine hierzu parallele Unterseite 18, welche in nicht dargestellter Weise in den Bereichen zwischen den Distanzstücken 14 mit einem Raster von Ausnehmungen oder Vertiefungen versehen ist, deren jede z.B. die Form eines flachen Quaders oder Kreiszylinders hat.

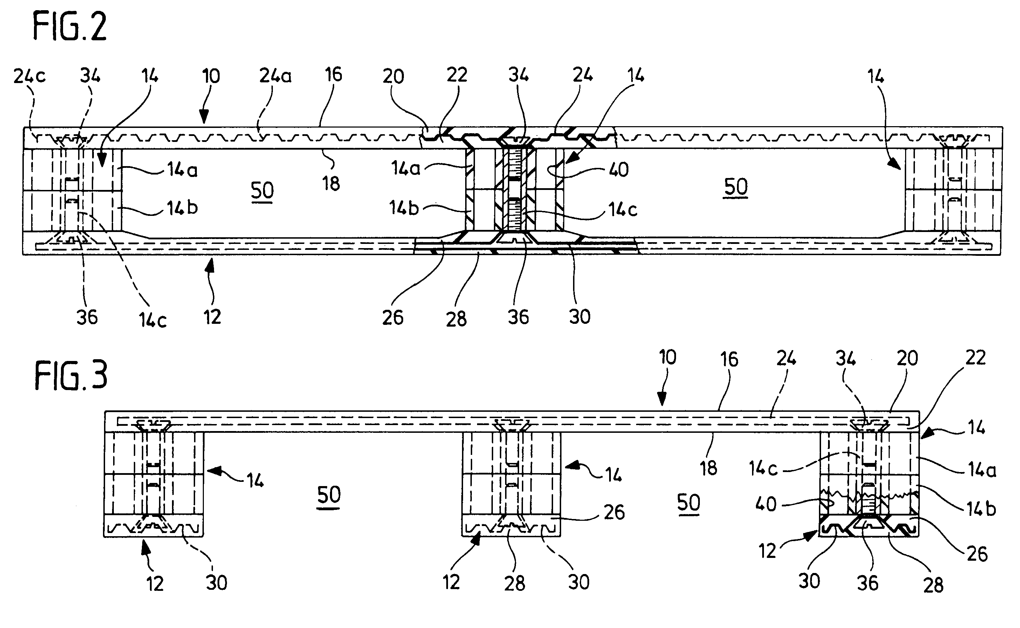

Wie am besten die Fig. 2 erkennen läßt, besteht die Deckplatte 10 aus einer oberen und einer unteren Lage 20 bzw. 22 aus der oben geschilderten Gummigranulat-Verbundmasse und einer zwischen diese beiden Lagen eingebetteten Einlage 24 in Form einer Metallblechplatte; die letztere ist etwas kleiner als die Lagen 20 und 22, so daß diese über Randstreifenbereiche der beiden Lagen miteinander verbunden sind. Gleiches gilt für jede der Kufen 12, die aus einer oberen und einer unteren Lage 26 bzw. 28 aus der Gummigranulat-Verbundmasse und einer Einlage 30 zusammengesetzt ist; auch die letztere ist wieder etwas kleiner als die beiden Lagen 26 und 28, so daß diese in Randstreifenbereichen miteinander verbunden sind.

Jedes der Distanzstücke 14 ist aus zwei kreisförmigen Scheiben 14a und 14b zusammengesetzt, welche ebenfalls aus der Gummigranulat-Verbundmasse bestehen. Diese beiden Scheiben nehmen eine durchgehende Gewindebuchse 14c auf, in deren Innengewinde von oben und unten Schrauben 34 und 36 eingeschraubt sind, u.z. durch die Deckplatte 10 bzw. die Kufen 12 hindurch, so daß über diese Schrauben die verschiedenen Bauteile der Palette zusammengehalten werden.

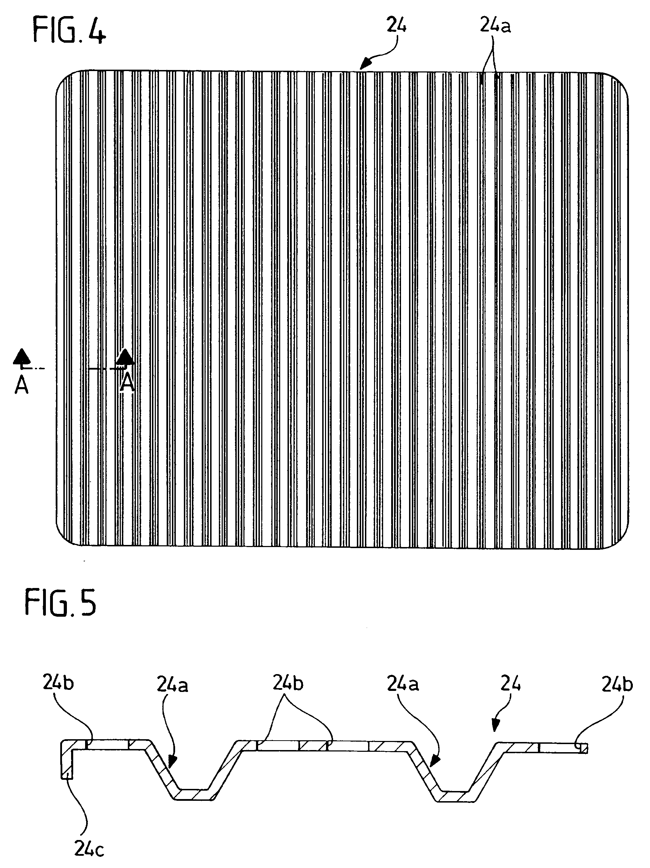

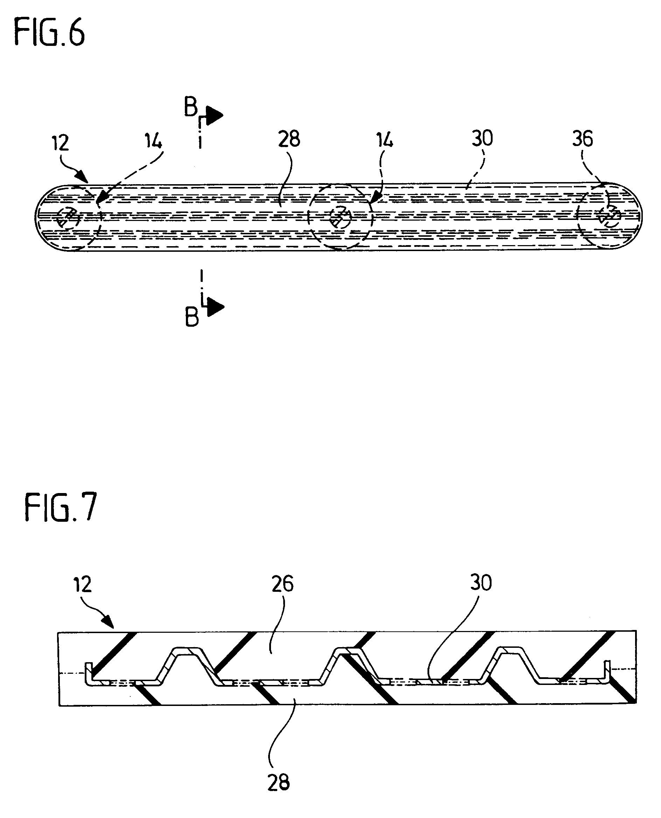

Anhand der Figuren 4 und 5 soll nun die Einlage 24 näher beschrieben werden, wobei die Einlage 30 entsprechend ausgebildet sein soll.

Bei der Einlage 24 handelt es sich um eine profilierte Metallblechplatte mit parallel zueinander verlaufenden Nuten 24a bzw. Rippen und zu diesen parallelen abgekanteten Randbereichen 24c, und zwischen den Nuten bzw. Rippen ist die Metallblechplatte gelocht - die Löcher wurden mit 24b bezeichnet.

Die Deckplatte 10 hat vorzugsweise eine Länge von 1200 mm und eine Breite von 1000 mm sowie eine Dicke von 20 mm, das Metallblech, aus dem die Einlagen 24 und 30 hergestellt wurden, hat vorzugsweise eine Dicke von 1 mm, die Nuten 24a sind 6,5 mm tief und haben einen Mittenabstand von 340 mm. Die Randstreifen, längs welcher die Lagen 20 und 22 bzw. 26 und 28 miteinander verbunden sind, haben vorzugsweise eine Breite von 5 mm. Die Breite der Kufen 14 beträgt vorzugsweise 120 mm und bei einer bevorzugten Ausführungsform der erfindungsgemäßen Palette sind die Kufen 15 mm hoch. Der Durchmesser der Distanzstücke 14 beträgt vorzugsweise 120 mm und sie sind insbesondere 85 mm hoch.

Bei der Herstellung der Scheiben 14a und 14b wurden in diesen durchgehende, kanalartige Hohlräume 40 erzeugt.

Ein bevorzugtes Herstellungsverfahren für die Deckplatte 10 zeichnet sich durch einzelne, mehrere oder alle der vorstehenden Merkmale aus, und entsprechendes gilt, soweit anwendbar, für die Herstellung der Kufen 12 und der Distanzstücke 14.

Alte Fahrzeugreifen werden mit einem Shredder zu handtellergroßen Teilen zerkleinert; die letzteren werden dann bei der Temperatur flüssigen Stickstoffs in einer Hammermühle granuliert, so daß sich ein Altreifen-Gummigranulat mit einer mittleren Korngröße von vorzugsweise ca. 1 mm ergibt. Fremdstoffe, wie Stahlreste, Schmutz und dergleichen werden in bekannter Weise vom Gummigranulat abgesondert.

Das Gummigranulat wird dann in einem Mischer mit einer Masse aus synthetischem Latex gemischt, so daß sich eine Verbundmasse mit einem Latexanteil von vorzugsweise ca. 12 Gewichtsprozent ergibt. Gleichzeitig wird ein Vulkanisationshilfsmittel in die Verbundmasse eingemischt.

Dann wird die Verbundmasse in einem Kalander zu Bahnen gewalzt bzw. gepreßt, die eine Dicke von ca. 4 mm haben und für die Herstellung der vorstehend beschriebenen Deckplatte 10 vorzugsweise gleich eine Breite von 12 mm. Die Kalanderwalzen können so beheizt sein, daß die Latexmasse während der Umformung der Verbundmasse zu Bahnen etwas anvulkanisiert wird.

Aus diesen Bahnen werden Zuschnitte hergestellt, deren Abmessungen ungefähr denjenigen der Deckplatte 10 entsprechen. Zwei solche Zuschnitte bilden später die obere Lage 20 und die untere Lage 22. In ein entsprechendes Preßwerkzeug einer Presse wird dann zunächst eine der beiden Lagen eingelegt, dann die Einlage 24 und schließlich die andere Lage aus der geschilderten Verbundmasse, worauf die drei Komponenten des sogenannten Laminats in der Presse miteinander verpreßt werden, u.z. bei 180° C und für eine Dauer von 10 Minuten, um die Latexmasse auszuvulkanisieren und die beiden Lagen 20 und 22 miteinander und mit der Einlage 24 zu verbinden. Durch das Auswalzen der Verbundmasse zu Bahnen und das Verpressen der Lagen des Laminats miteinander ergibt sich eine Deckplatte 10, in der bei Herstellung eines Querschnitts anhand der Materialstrukturen aber immer noch festgestellt werden kann, wie die Deckplatte hergestellt worden ist. Bei dem Verpressen des Laminats werden die beiden Lagen 20 und 22 auch durch die Löcher 24b der Einlage 24 hindurch miteinander verbunden, und die Verbundmasse der beiden Lagen wird auch in die Profilierung der Einlage 24 hineingepreßt.

Wie bereits erwähnt, werden die Kufen 12 in entsprechender Weise hergestellt, und die Herstellung der Scheiben 14a und 14b der Distanzstücke 14 unterscheidet sich von der Herstellung der Deckplatte 10 bzw. der Kufen 12 nur dadurch, daß metallische Einlagen weggelassen werden und die Verbundmasse in entsprechend gestaltete runde Preßformen eingefüllt wird.

Die Scheiben 14a und 14b werden dann mit zentrischen Bohrungen versehen, in die die Gewindebuchsen 14c eingepreßt werden. In der Deckplatte 10 und in den Kufen 14 werden außerdem Bohrungen für die Schrauben 34 und 36 erzeugt, so daß dann die Palette mittels dieser Schrauben zusammenmontiert werden kann. Die Schrauben und die Gewindebuchsen bestehen vorzugsweise aus rostfreiem Stahl.

Für die Herstellung der Deckplatte 10 wird eine Preßform verwendet, deren untere Formfläche mit einem Raster von Erhebungen versehen ist, durch die die Aussparungen in der Unterseite der unteren Lage 22 erzeugt werden, wobei diese Aussparungen natürlich nicht so tief sein dürfen, daß dadurch die Unterseite der Einlage 24 partiell freigelegt werden würde. Zwischen der Deckplatte 10, den Kufen 12 und den Distanzstücken 14 besitzt die Palette Öffnungen 50, in die die Gabeln eines Hub- oder Flurfördergeräts eingeschoben werden können.

Bei einer besonders bevorzugten Ausführungsform der Erfindung wird dem Altreifen-Gummigranulat ein handelsüblicher Styrol-Butadien-Latex (insbesondere carboxylierter SBR) als Bindemittel beigemischt; besonders vorteilhaft ist es, wenn zur Erzielung einer verhältnismäßig hohen Steifigkeit der SBR mehr als 50 % Styrol enthält. Als besonders geeignet hat sich ein Latex aus der Produktgruppe erwiesen, welche von der Firma Bayer AG unter dem Warenzeichen BAYSTAL angeboten wird (P- oder T-Reihe).

Desweiteren ist es empfehlenswert, dem Latex ein Dispergiermittel beizumischen, z.B. das von der Firma Bayer AG unter dem Warenzeichen BAYKANOL PQ angebotene Dispergiermittel. Bezogen jeweils auf 100 Teile Latex-Trockensusbstant (dies soll auch für die folgenden Angaben gelten) ist 1 Teil Dispergiermittel zu empfehlen.

Als Vulkanisationshilfsmittel empfiehlt sich bei nicht carboxyliertem Latex vor allem das folgende Vulkanisationssystem:

| | |
|---|---|
| Zinkoxid, z.B. "Zinkoxid aktiv" (Warenzeichen der Firma Bayer AG) | 3,0 Teile |
| Schwefel, z.B. Kolloidschwefel 95 | 1,5 Teile |
| Vulkanisationsbeschleuniger, z.B. "Vulkacit" (Warenzeichen der Fa. Bayer AG) ZBEC | 2,0 Teile. |

Schließlich empfiehlt es sich, in die Verbundmasse ein Alterungsschutzmittel einzumischen, z.B. 1,0 Teile des Produkts "Vulkanox" (Warenzeichen der Firma Bayer AG) BKF.

## Patentansprüche

1. Transport-bzw. Lagerpalette mit einer Deckplatte zum Ablegen des zu transportierenden bzw. abzulegenden Gutes, an deren Unterseite Öffnungen zum Einschieben der gabelförmigen Tragelemente eines Hubgeräts vorgesehen sind, wobei die Deckplatte ein durch mindestens eine metallische Einlage ausgesteiftes Formteil aus einer Verbundmasse ist, welche mindestens im wesentlichen aus Altreifen-Gummigranulat und einer Bindemittelmasse besteht, dadurch gekennzeichnet, daß die Deckplatte (10) ein Laminat aus wenigstens zwei aus der Verbundmasse bestehenden Lagen (20, 22) und aus einer zwischen letzteren angeordneten gelochten Einlage (24) ist, wobei die aus der Verbundmasse bestehenden Lagen von bahnförmigen Zuschmitten aus dem Gemisch aus Altreifen-Gummigranulat und der Bindemittelmasse gebildet werden und die Elemente (20, 24, 22) des Laminats miteinander durch Verpressen eine Einheit (10) bilden, so daß die Verbundmasse-Lagen (20, 22) wenigstens bereichsweise durch ausvulkamisiertes Bindemittel verbunden sind.

2. Palette nach Anspruch 1, dadurch gekennzeichnet, daß die Verbundmasse-Lagen (20, 22) längs ihrer Ränder mindestens bereichsweise unmittelbar gegeneinander anliegen und miteinander verbunden sind.

3. Palette nach Anspruch 2, dadurch gekennzeichnet, daß die Verbundmasse-Lagen (20, 22) längs ihrer Ränder überall gegeneinander anliegen und miteinander verbunden sind.

4. Palette nach einem oder mehreren der Ansprüche 1 bis 3, dadurch gekennzeichnet, daß die Einlage (24) eine Metallblechplatte ist.

5. Palette nach Anspruch 4, dadurch gekennzeichnet, daß die Metallblechplatte (24) derart dimensioniert ist, daß zwischen ihren Rändern und denjenigen der Verbundmasse-Lagen (20, 22) nur schmale Randstreifen der letzteren verbleiben, über die die Verbundmasse-Lagen miteinander verbunden sind.

6. Palette nach Anspruch 5, dadurch gekennzeichnet, daß die Verbundmasse-Lagen (20, 22) auch durch die Löcher (24b) der Metallblechplatte (24) hindurch miteinander verbunden sind.

7. Palette nach einem oder mehreren der Ansprüche 4 bis 6, dadurch gekennzeichnet, daß die Metallblechplatte (24) eine ihre Biegesteifigkeit erhöhende Profilierung (24a) aufweist.

8. Palette nach Anspruch 7, dadurch gekennzeichnet, daß die Metallblechplatte (24) ein Wellenprofil aufweist.

9. Palette nach einem oder mehreren der Ansprüche 4 bis 8, dadurch gekennzeichnet, daß die Metallblechplatte (24) eine Stahlblechplatte ist.

10. Palette nach Anspruch 9, dadurch gekennzeichnet, daß die Stahlblechplatte (24) mit einem Korossionsschutzüberzug versehen ist.

11. Palette nach einem oder mehreren der vorstehenden Ansprüche, dadurch gekennzeichnet, daß die Verbundmasse mindestens 80 % Altreifen-Gummigranulat enthält.

12. Palette nach einem oder mehreren der vorstehenden Ansprüche, dadurch gekennzeichnet, daß die Bindemittelmasse eine vulkanisierte Latexmasse ist.

13. Palette nach einem oder mehreren der vorstehenden Ansprüche, dadurch gekennzeichnet, daß die Deckplatte (10) nur zwei Verbundmasse-Lagen (20, 22) aufweist.

14. Palette nach einem oder mehreren der vorstehenden Ansprüche, dadurch gekennzeichnet, daß die Deckplatte (10) eine Dicke von 18 bis 25 mm, vorzugsweise von 20 mm hat.

15. Palette nach einem oder mehreren der Ansprüche 4 bis 14, dadurch gekennzeichnet, daß das Metallblech (24) eine Dicke von 0,8 bis 1,5 mm, vorzugsweise von 1 mm hat.

16. Palette nach einem oder mehreren der vorstehenden Ansprüche, dadurch gekennzeichnet, daß die Deckplatte (10) eine geschlossene Oberseite hat.

17. Palette nach einem oder mehreren der vorstehenden Ansprüche, dadurch gekennzeichnet, daß die Oberseite der Deckplatte (10) eben ist.

18. Palette nach einem oder mehreren der vorstehenden Ansprüche, dadurch gekennzeichnet, daß die Unterseite der Deckplatte (10) mit einem Raster von Aussparungen versehen ist.

19. Palette nach einem oder mehreren der vorstehenden Ansprüche, dadurch gekennzeichnet, daß die Einlage (24) allseitig in die Verbundmasse eingebettet ist.

20. Palette nach einem oder mehreren der vorstehenden Ansprüche, dadurch gekennzeichnet, daß die Deckplatte (10) zur Bildung der an ihrer Unterseite vorgesehenen Öffnungen (50) über Distanzstücke (14), welche zumindest im wesentlichen aus der Verbundmasse bestehen, mit wenigstens einem Bodenauflageelement (12) verbunden ist.

21. Palette nach Anspruch 20, dadurch gekennzeichnet, daß das Bodenauflageelement (12) denselben Aufbau wie die Deckplatte (10) hat.

22. Palette nach Anspruch 20 oder 21, dadurch gekennzeichnet, daß wenigstens zwei und vorzugsweise drei parallel zueinander verlaufende kufenförmige Bodenauflageelemente (12) vorgesehen sind.

23. Palette nach einem oder mehreren der Ansprüche 20 bis 22, dadurch gekennzeichnet, daß jedes der Distanzstücke (14) einen Verbundmasse-Körper aufweist, in dem mehrere, sich in vertikaler Richtung erstreckende kanalartige Hohlräume (40) ausgebildet sind.

24. Palette nach einem oder mehreren der Ansprüche 20 bis 23, dadurch gekennzeichnet, daß die Distanzstücke (14) jeweils eine sich in vertikaler Richtung erstreckende Gewindehülse (14c) enthalten, über welche sowie Schrauben (34, 36) die Deckplatte (10), die Distanzstücke (14) und das Bodenauflageelement bzw. die Bodenauflageelemente (12) miteinander verbunden sind.

25. Verfahren zur Herstellung einer Palette nach einem oder mehreren der vorstehenden Ansprüche, dadurch gekennzeichnet, daß ein Gemisch aus Altreifen-Gummigranulat und einer Bindemittelmasse durch Kalandrieren zu einer Bahn verarbeitet wird, daß aus der Bahn der Größe der Deckplatte entsprechende Zuschnitte hergestellt werden, daß wenigstens zwei Lagen aus solchen Zuschnitten und die metallische Einlage als Zwischenlage aufeinandergeschichtet werden und daß die Elemente des so erhaltenen Laminats bei hinreichend hoher Temperatur durch Pressen zu einer Einheit verbunden werden.

26. Verfahren nach Anspruch 25, dadurch gekennzeichnet, daß zumindest der überwiegende Teil des Altreifen-Gummigranulats eine Korngröße von 0,5 bis 5 mm, vorzugsweise von 0,5 bis 2 mm und insbesondere von 0,8 bis 1,2 mm hat.

## Claims

1. Transport and/or storage pallet having a top deck for depositing thereupon the goods to be transported or to be deposited, at the bottom side of which openings for inserting therein the fork-shaped carrying elements of a lifting device are provided, said top deck being a moulded part made of a composite material being toughened by at least one metallic insert, said composite material consisting at least substantially of old tire rubber granulate and a binder agent mass, characterised in that said top deck (10) is a laminate of at lest two layers (20, 22) consisting of the composite material and of a perforated insert (24) disposed between same, said layers consisting of the said composite material being formed of web-like pre-cut blanks consisting of the mixture of old tire rubber granulate and the said binding agent mass, and the elements (20, 24, 22) of the said laminate forming a unit (10) due to press compacting, so that the composite material layers (20, 22) are at least in certain areas compounded by full-vulcanised binder means.

2. Pallet as claimed in claim 1, characterised in that the said composite material layers (22, 22) are at least in certain areas immediately adjacent to one another along their edges and are connected to one another.

3. Pallet as claimed in claim 2, characterised in that the said composite material layers (22, 22) are adjacent to one another everywhere along their edges and are connected to one another.

4. Pallet as claimed in anyone of claims 1 to 3, characterised in that the insert (24) is a sheet metal plate.

5. Pallet as claimed in claim 4, characterised in that the sheet metal plate (24) is dimensioned so that between its edges and those of the composite material layers (20, 22) there remain only narrow marginal strips of the latter, by means of which the composite material layers are connected to one another.

6. Pallet as claimed in claim 5, characterised in that the composite material layers (20, 22) are also connected through the holes (24b) of the sheet metal plate (24) to one another.

7. Pallet as claimed in anyone of claims 4 to 6, characterised in that said sheet metal plate (24) is provided with a cross-sectional shaping (24a) increasing its flexural strength.

8. Pallet as claimed in claim 7, characterised in that the sheet metal plate (24) is provided with a wave profile.

9. Pallet as claimed in anyone of claims 4 to 8, characterised in that the sheet metal plate (24) is a steel sheet metal plate.

10. Pallet as claimed in claim 9, characterised in that the steel sheet metal plate (24) is provided with a corrosion prevention coating.

11. Pallet as claimed in any of the above claims, characterised in that the composite material contains at least 80% of the old tire rubber granulate.

12. Pallet as claimed in any of the above claims, characterised in that the said binding agent mass is a vulcanised Latex mass.

13. Pallet as claimed in any of the above claims, characterised in that the said top deck (10) contains two composite material layers (20, 22) only.

14. Pallet as claimed in any of the above claims, characterised in that the said top deck (10) has a thickness of 18 to 25 mm, preferably of 20 mm.

15. Pallet as claimed in anyone of claims 4 to 14, characterised in that the sheet metal plate (24) has a thickness of 0.8 to 1.5 mm, preferably of 1 mm.

16. Pallet as claimed in any of the above claims, characterised in that the top deck (10) is provided with a whole upper surface.

17. Pallet as claimed in any of the above claims, characterised in that the upper surface of the top deck (10) is flat.

18. Pallet as claimed in any of the above claims, characterised in that the lower side of the top deck (10) is provided with a grid of recesses.

19. Pallet as claimed in any of the above claims, characterised in that the insert (24) is embedded into the composite material on all sides.

20. Pallet as claimed in any of the above claims, characterised in that the top deck (10) is connected with at least one floor laying-on element (12) by means of spacer pieces (14) which at least substantially consist of the composite material, for forming the openings (50) provided in its underside.

21. Pallet as claimed in claim 20, characterised in that the floor laying-on element (12) has the same construction as the top deck (10).

22. Pallet as claimed in claim 20 or 21, characterised in that at least two, and preferably three, skid-shaped floor laying-on elements (12) extending in parallel to one another are provided.

23. Pallet as claimed in any of claims 20 to 22, characterised in that each one of the spacer pieces (14) contains a composite material body in which a plurality of channel-like hollow spaces (40) are formed which extend in vertical direction.

24. Pallet as claimed in any of claims 20 to 23, characterised in that said spacer pieces (14) contain each a tapped bush (14c) extending in vertical direction, by means of which, together with screws (34, 36), the top deck (10), the spacer pieces (14) and the floor laying-on element or the floor laying-on elements (12) respectively are connected to one another.

25. Method for producing a pallet in accordance with one or more of the above claims, characterised in that a mixture consisting of old tire rubber granulate and a binder agent mass is processed by means of calendering to make a web, that from said web pre-cut blanks in accordance with the size of the top deck are produced, that at least two layers of such pre-cut blanks and the metallic insert being an intermediate layer are laid upon one another, and that the elements of the thus produced laminate are compounded to make a unit by pressing at a sufficiently high temperature.

26. Method as claimed in claim 25, characterised in that at least the preponderant part of the old tire rubber granulate has a grain size of 0,5 to 5 mm, preferably of 0.5 to 2 mm, and in particular of 0.8 to 1.2 mm.

## Revendications

1. Palette de transport ou d'entreposage avec une plaque de couverture pour déposer la marchandise à transporter ou à entreposer, à la face inférieure de laquelle des ouvertures sont prévues pour insérer les éléments porteurs en forme de fourches d'un appareil de levage, la plaque de couverture étant une pièce moulée dans une masse composite, renforcée par au moins une pièce intercalaire métallique, laquelle est constituée au moins essentiellement de granulat de caoutchouc de vieux pneus et d'un liant, caractérisée en ce que la plaque de couverture (10) est un laminé d'au moins deux couches (20, 22) de la masse composite et d'une pièce intercalaire perforée (24) placée entre celles-ci, les couches constituées de la masse composite étant formées de bandes découpées dans un mélange de granulat de vieux pneus et de masse de liant et les éléments (20, 24, 22) du laminé formant ensemble une unité (10) par pressage, de façon à ce que les couches de masse composite (20, 33) soient reliées au moins par endroits par du liant vulcanisé.

2. Palette suivant la revendication 1 caractérisée en ce que, le long de leurs bords, les couches de masse composite (20, 22) sont au moins par endroits directement adjacentes et reliées ensemble.

3. Palette suivant la revendication 1, caractérisée en ce que, le long de leurs bords, les couches de masse composite (20, 22) sont partout directement adjacentes et reliées ensemble.

4. Palette suivant l'une ou plusieurs des revendications 1 à 3, caractérisée en ce que la pièce intercalaire (24) est une plaque de tôle métallique.

5. Palette suivant la revendication 4, caractérisée en ce que la plaque de tôle métallique (24) est dimensionnée de telle façon que, entre ses bords et ceux de la masse composite (20, 22), il ne subsiste que des bandes étroites de bordure de cette dernière, va lesquelles les couches de masse composite sont reliées entre elles.

6. Palette suivant la revendication 5, caractérisée en ce que les couches de masse composite (20, 22) sont également reliées entre elles à travers les trous (24b) de la plaque de tôle métallique (24).

7. Palette suivant l'une ou plusieurs des revendications 4 à 6, caractérisée en ce que la plaque de tôle métallique (24) présente un profil (24a) augmentant sa rigidité à la flexion.

8. Palette suivant la revendication 7, caractérisée en ce que la plaque de tôle métallique (24) présente un profil ondulé.

9. Palette suivant l'une ou plusieurs des revendications 4 à 8, caractérisée en ce que la plaque de tôle métallique (24) est une plaque de tôle d'acier.

10. Palette suivant la revendication 9, caractérisée en ce que la plaque de tôle d'acier (24) est pourvue d'un revêtement de protection contre la corrosion.

11. Palette suivant l'une ou plusieurs des revendications précédentes, caractérisée en ce que la masse composite contient au moins 80% de granulat de caoutchouc de vieux pneus.

12. Palette suivant l'une ou plusieurs des revendications précédentes, caractérisée en ce que la masse de liant est une masse de latex vulcanisée.

13. Palette suivant l'une ou plusieurs des revendications précédentes, caractérisée en ce que la plaque de couverture (10) ne présente que deux couches de masse composite (20, 22).

14. Palette suivant l'une ou plusieurs des revendications précédentes, caractérisée en ce que la plaque de couverture (10) a une épaisseur de 18 à 25 mm, de préférence de 20 mm.

15. Palette suivant l'une ou plusieurs des revendications 4 à 14, caractérisée en ce que la tôle métallique (24) a une épaisseur de 0,8 à 1,5 mm, de préférence de 1 mm.

16. Palette suivant l'une ou plusieurs des revendications précédentes, caractérisée en ce que la plaque de couverture (10) a une surface supérieure fermée.

17. Palette suivant l'une ou plusieurs des revendications précédentes, caractérisée en ce que la surface supérieure de la plaque de couverture (10) est plane.

18. Palette suivant l'une ou plusieurs des revendications précédentes, caractérisée en ce que la face inférieure de la plaque de couverture (10) est pourvue d'un maillage d'évidements.

19. Palette suivant l'une ou plusieurs des revendications précédentes, caractérisée en ce que la pièce intercalaire (24) est noyée de partout dans la masse composite.

20. Palette suivant l'une ou plusieurs des revendications précédentes, caractérisée en ce que, pour la formation des ouvertures (50) prévues à sa face inférieure, la plaque de couverture (10) est reliée par l'intermédiaire de pièces d'écartement (14), lesquelles sont au moins essentiellement constituées de la masse composite, à au moins un élément d'appui au sol (12).

21. Palette suivant la revendication 20, caractérisée en ce que l'élément d'appui au sol (12) a la même structure que la plaque de couverture (10).

22. Palette suivant la revendication 20 ou 21, caractérisée en ce qu'il est prévu au moins deux et de préférence trois éléments d'appui au sol (12) en forme de patins parallèles entre eux.

23. Palette suivant l'une ou plusieurs des revendications 20 à 22, caractérisée en ce que chacune des pièces d'écartement (14) présente un corps en masse composite, dans lequel sont formés plusieurs espaces (40) en forme de canaux s'étendant en direction verticale.

24. Palette suivant l'une ou plusieurs des revendications 20 à 23, caractérisée en ce que les pièces d'écartement (14) comprennent chacune une douille filetée (14c) s'étendant en direction verticale, à l'aide desquelles et des vis (34, 36) les pièces d'écartement (14) et l'élément d'appui au sol ou les éléments d'appui au sol (12) sont reliés entre eux.

25. Procédé de fabrication d'une palette suivant l'une ou plusieurs des revendications précédentes, caractérisé en ce qu'un mélange de granulat de caoutchouc de vieux pneus et une masse de liant est transformé par calandrage en une bande, en ce que des découpes de la bande correspondant à la taille de la plaque de couverture sont fabriquées, en ce qu'au moins deux couches constituées de telles découpes et de la pièce intercalaire métallique comme couche intermédiaire sont empilées et en ce que les éléments du laminé ainsi obtenu sont reliés en une unité à température suffisamment élevée par pressage.

26. Procédé suivant la revendication 25, caractérisée en ce qu'au moins la plus grande partie du granulat de caoutchouc de vieux pneus a une granulométrie de 0,5 à 5 mm, de préférence de 0,5 à 2 mm et en particulier de 0,8 à 1,2 mm.
